(19) 〔Europäisches Patentamt / European Patent Office / Office européen des brevets〕

(11) **EP 4 769 399 A1**

(12) **EUROPEAN PATENT APPLICATION**
published in accordance with Art. 153(4) EPC

(43) Date of publication:
**01.07.2026 Bulletin 2026/27**

(21) Application number: **25864732.0**

(22) Date of filing: **27.02.2025**

(51) International Patent Classification (IPC):
***G11B 20/00*** *(2006.01)*

(52) Cooperative Patent Classification (CPC):
Y02D 30/70

(86) International application number:
**PCT/CN2025/079555**

(87) International publication number:
**WO 2026/056224 (19.03.2026 Gazette 2026/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.09.2024 CN 202411279492**

(71) Applicant: **Vision Intelligence Co., Ltd.
Hefei, Anhui 230094 (CN)**

(72) Inventors:
• **WANG, Song
Hangzhou, Zhejiang 310018 (CN)**
• **MA, Xiao
Beijing 100012 (CN)**

(74) Representative: **Valet Patent Services Limited
c/o Caya 83713X
Am Börstig 5
96052 Bamberg (DE)**

(54) **AUDIO RECORDING AND CONVERSION METHOD FOR BLUETOOTH EARPHONE**

(57) Disclosed is an audio recording and conversion method for a Bluetooth headset, which specifically relates to the field of audio recording and conversion. In the present disclosure, a Bluetooth function of an audio source device is enabled to pair the audio source device with a Bluetooth headset. Subsequently, recording is initiated by tapping a "record" button on the headset, and the system guides a user to select an audio format and confirm recording settings. During the recording process, a built-in microphone of the headset acquires an audio signal in real time, and the acquired audio signal is subjected to denoising and signal amplification. The processed audio signal is then converted into a digital signal. A watermark is embedded into the processed digital signal, and a watermark assessment value is calculated. Whether the watermark has been embedded is verified by performing comparison on the basis of the watermark assessment value. The digital signal is then converted into an analog signal to reconstruct an audio signal. Finally, the system performs watermark detection on the reconstructed audio signal. Comparison is performed on the basis of the detected watermark information to ensure integrity and authenticity of the audio signal data.

Step A1: enabling a Bluetooth function of an audio source device, performing pairing and connection via Bluetooth, and confirming recording settings

Step A2: during a recording process, acquiring an audio signal in real time using a built-in microphone of the Bluetooth headset, and processing the acquired audio signal to obtain a digital signal

Step A3: embedding a watermark into the processed digital signal, and calculating a watermark assessment value on the basis of the embedded watermark

Step A4: converting the digital signal, in which the watermark has been embedded, into an analog signal, and reconstructing an audio signal

Step A5: performing watermark detection on the reconstructed audio signal, and performing determination on the basis of the detected watermark

**FIG. 1**

**Description**

The present disclosure claims priority to Chinese Patent Application No. CN 202411279492.2, filed with the China National Intellectual Property Administration on September 12, 2024, and entitled "Audio Recording and Conversion Method for Bluetooth Headset", which is incorporated herein by reference in its entirety.

**FIELD**

The present disclosure relates to the technical field of audio recording and conversion, and specifically, relates to an audio recording and conversion method for Bluetooth headset.

**BACKGROUND**

In today's fast-paced digital era, Bluetooth headsets, as representative personal audio devices, have been deeply introduced into various aspects of our lives, ranging from daily commute and fitness activities to remote work and online education. Owing to their convenience, wireless freedom, and high-quality audio performance, Bluetooth headsets have gained a broad user base. However, as technology continues to advance and application scenarios become increasingly diverse, users' demands for enhanced functionalities of Bluetooth headsets have grown accordingly, especially in terms of secure audio conversion and management, which has emerged as a critical issue to be addressed.

Nevertheless, in practical use, conventional Bluetooth headset audio recording still suffers from certain drawbacks. For example, traditional Bluetooth headsets primarily focus on the stability of audio transmission and sound quality performance, while exhibiting obvious deficiencies in terms of the confidentiality of converted audio recording data.

**SUMMARY**

In order to overcome the described defect in the prior art, the embodiments of the present disclosure provide an audio recording and conversion method for a Bluetooth headset, so as to solve the problem mentioned in the described background.

In order to achieve the described object, the present disclosure provides the following technical solution:

Step A1: enabling a Bluetooth function of an audio source device, performing pairing and connection via Bluetooth, and confirming recording settings;

Step A2: during a recording process, acquiring an audio signal in real time using a built-in microphone of the Bluetooth headset, and processing the acquired audio signal to obtain a digital signal;

Step A3: embedding a watermark into the processed digital signal, and calculating a watermark assessment value on the basis of the embedded watermark;

Step A4: converting the digital signal, in which the watermark has been embedded, into an analog signal, and reconstructing an audio signal; and

Step A5: performing watermark detection on the reconstructed audio signal, and performing comparison on the basis of the detected watermark.

Preferably, in step A1, after the Bluetooth function of the audio source device is enabled, the device is configured to enter a "discoverable" state so that it can be detected by nearby Bluetooth devices. A Bluetooth audio device to be connected is configured to enter a pairing mode according to instructions in a user manual. On the Bluetooth setting page of the audio source device, "Search for devices" is tapped to initiate scanning for nearby Bluetooth devices. From the scanning results, the name of the Bluetooth audio device to be connected is found and selected.

Once a user lightly taps a dedicated "recording" button on the Bluetooth headset, a built-in microphone of the Bluetooth headset is activated to be ready to receive sound signals. At the same time, the Bluetooth headset transmits a recording start signal to the paired smart device via the Bluetooth connection, and once the paired smart device receives the recording start signal, the paired smart device displays a recording application notification on its screen. The system prompts the user with a user-friendly interface and clear speech: "Recording is about to start. Please select your desired audio format". As needed, the user selects the WAV audio format from options provided on the interface, and once the audio format is selected, the system displays an overview of the current recording settings. The user needs to carefully check these settings to ensure that they meet his/her requirements. If modification is required, the user taps the corresponding options to make adjustments. Once the recording settings are determined, the user taps a "Start recording" button, and the system starts recording according to the set parameters.

Preferably, in step A2, the acquired audio signal is subjected to signal amplification and denoising, wherein a denoising method specifically comprises:

Step B1: preprocessing the acquired audio signal, wherein the preprocessing comprises performing direct-current offset cancellation and applying a window function at signal front ends, so as to reduce the influence of noise during processing;

Step B2: converting a time domain signal into a frequency domain representation using a fast Fourier transform, and after a frequency spectrum is obtained, representing the frequency spectrum as an amplitude spectrum and a phase spectrum;

Step B3: selecting a segment that does not contain a useful signal to perform noise estimation, and calculating a frequency spectrum of a noise segment to obtain an amplitude spectrum of said segment;

in this step, smoothing is applied to the frequency spectrum of noise to obtain a more stable noise model;

Step B4: performing spectral subtraction on the amplitude spectrum of an original signal to obtain a second amplitude spectrum, wherein a calculation method for the second amplitude spectrum is specifically as follows:

$$F(a) = \max\left(2H(a) - \frac{G(a)+1}{2G(a)} - \beta, \ 0\right),$$

wherein F(a) represents the second amplitude spectrum obtained after denoising, G(a) represents the estimated noise amplitude spectrum, H(a) represents the amplitude spectrum of a noisy signal, $\beta$ represents an over-subtraction factor for further reducing residual noise, and max represents comparing two values and selecting the larger one;

Step B5: constructing a new frequency spectrum by combining the denoised amplitude spectrum with the phase spectrum of the original signal, wherein a calculation method for the new frequency spectrum is specifically as follows:

$$F(a)_0 = \frac{F(a)}{2F(a)+1} e^{L\delta(a)},$$

wherein $F(a)_0$ represents the constructed new frequency spectrum, F(a) represents the second amplitude spectrum obtained after denoising, eL(a) represents the phase spectrum of the original noisy signal, and $\delta(a)$ represents the phase angle of an a-th frequency component; and

Step B6: converting the denoised frequency spectrum back into a time domain using an inverse fast Fourier transform to obtain a processed audio signal.

A method for amplifying the audio signal specifically comprises:

Step C1: converting the denoised audio signal into an electrical signal.

This electrical signal is typically very weak and may only be recognized by sensitive electronic components.

Step C2: introducing the weak audio signal into a preamplifier which increases the strength of the weak signal to a level available for processing.

Step C3: on the basis of a gain adjustment function of the preamplifier, the user setting a gain value as needed.

The gain refers to the amplification ratio of the signal, and appropriate gain settings ensure that the audio signal is not excessively distorted or contaminated by noise.

Step C4: subjecting the amplified signal to subsequent digital signal processing, so as to further clarify the signal and apply various audio effects.

Preferably, in step A3, after a watermark is embedded into the digital signal, a watermark assessment value is calculated, wherein a calculation method for a watermark stability value is specifically as follows:

Wd=X(D+I), wherein Wd represents the watermark stability value, X represents a correlation coefficient, I represents a frequency domain watermark evaluation value, and D represents a first capacity value;

a calculation method for a watermark sampling ratio is specifically as follows:

$$Z = \ln \frac{\sum_{b=0}^{T}(2q^2(b)+1)}{q_0(b)\sum_{b=0}^{T}[q_0(b)-q(b)]^2},$$

wherein Z represents the watermark sampling ratio, q(b) represents a sample value of a host audio signal before watermark embedding, $q_0(b)$ represents a sample value of the host audio signal after watermark embedding, and T represents the total number of samples;

a calculation method for the watermark assessment value is specifically as follows:

$$Q = \left|\frac{W_d+1}{W_d-1}\right| \sqrt{X(W_d^2 + Z^2)},$$

wherein Q represents the watermark assessment value, X represents the correlation coefficient, Z represents the watermark sampling ratio, and Wd represents the watermark stability value.

Preferably, in step A4, a DAC device is selected, a reference voltage, an output range and a resolution of the DAC are set, and a digital signal to be converted is extracted; the processed digital signal values are written into a data input register of the DAC, waiting for conversion to start; according to the design of the DAC, the conversion is triggered by an external signal, and during the conversion process, a clock signal of the DAC is ensured to be correct, such that the digital signal is converted as planned;

once the DAC completes conversion, a stable analog signal is obtained at an output end; this process is influenced by the settling time of the DAC; the output analog signal is smoothed by a filter to obtain a more natural audio waveform, and after DAC and filtering, the signal is converted into a continuous analog waveform, wherein the continuous analog waveform is the reconstructed audio signal.

Preferably, in step A5, watermark information is extracted from the reconstructed audio signal, and calculation is performed on the extracted watermark information to obtain a watermark similarity value, wherein a calculation method for the watermark similarity value is specifically as follows:

$$V = \sum_{i=1}^{S} Y_i \times M \times N(e, \ f),$$

wherein V represents the watermark similarity value, S represents a sample point, M represents the number of audio frames, and N(e, f) represents an amplitude value of an f-th frequency point of an e-th frame;

calculation is performed on the basis of the calculated watermark similarity value; if the calculated watermark similarity value is equal to a preset watermark similarity value threshold, a security instruction is output, and the audio signal is stored in a built-in memory of the Bluetooth headset; and if the calculated watermark similarity value is not equal to the preset watermark similarity value threshold, a danger instruction is output, the process proceeds to step A2.

The present disclosure has the following technical effects and advantages:

The present disclosure provides an audio recording and conversion method for a Bluetooth headset. In the present disclosure, a Bluetooth pairing connection with an audio source device supports direct operation for recording and selection of an audio format on a Bluetooth headset. The system automatically processes an input audio signal and embeds a watermark into it. The digital signal is then converted into an analogue signal to reconstruct an audio output. Finally, the system performs watermark detection on the reconstructed audio to ensure the security and integrity of the audio data. This method enhances the confidentiality and security of recording data, and the reconstructed audio signal has high quality, thereby providing a more natural and realistic listening experience for the user.

**BRIEF DESCRIPTION OF THE DRAWINGS**

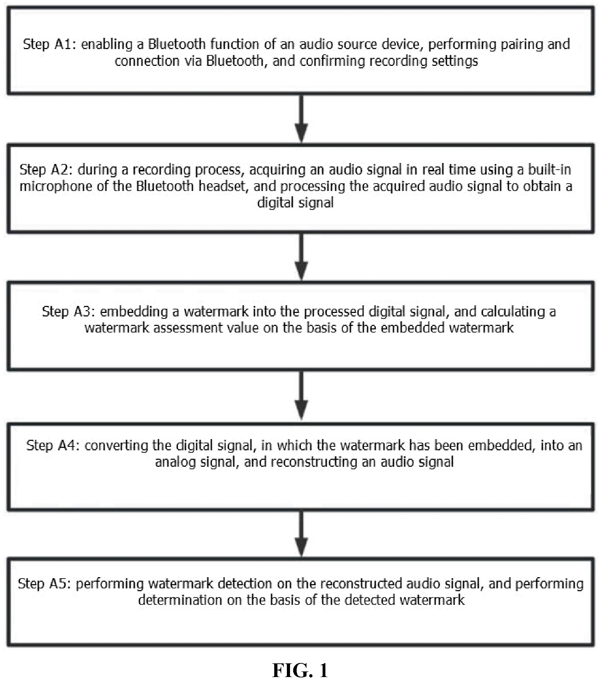

FIG.1 is a flowchart of a method according to the present disclosure.

## DETAILED DESCRIPTION OF THE EMBODIMENTS

The technical solutions in the embodiments of the present disclosure will be clearly and completely described below with reference to the accompanying drawings in the embodiments of the present disclosure. Obviously, the embodiments as described are a part of the embodiments of the present disclosure, not all of the embodiments. All other embodiments obtained by a person of ordinary skill in the art based on the embodiments of the present disclosure without any inventive effort shall all fall within the scope of protection of the present disclosure.

Referring to FIG. 1, the present disclosure provides an audio recording and conversion method for a Bluetooth headset, comprising the following steps:

Step A1: a Bluetooth function of an audio source device is enabled, pairing and connection are performed via Bluetooth, and recording settings are confirmed.

In step A1, after the Bluetooth function of the audio source device is enabled, the device is configured to enter a "discoverable" state so that it can be detected by nearby Bluetooth devices. A Bluetooth audio device to be connected is configured to enter a pairing mode according to instructions in a user manual. On the Bluetooth setting page of the audio source device, "Search for devices" is tapped to initiate scanning for nearby Bluetooth devices. From the scanning results, the name of the Bluetooth audio device to be connected is found and selected. At this time, a connection is established between the audio source device and the Bluetooth audio device.

Once a user lightly taps a dedicated "recording" button on the Bluetooth headset, a built-in microphone of the Bluetooth headset is activated to be ready to receive sound signals. At the same time, the Bluetooth headset transmits a recording start signal to the paired smart device via the Bluetooth connection, and once the paired smart device receives the recording start signal, the paired smart device displays a recording application notification on its screen. The system prompts the user with a user-friendly interface and clear speech: "Recording is about to start. Please select your desired audio format". As needed, the user selects the WAV audio format from options provided on the interface, and once the audio format is selected, the system displays an overview of the current recording settings. The user needs to carefully check these settings to ensure that they meet his/her requirements. If modification is required, the user taps the corresponding options to make adjustments. Once the recording settings are determined, the user taps a "Start recording" button, and the system starts recording according to the set parameters.

The recording setting parameters include the selected format, recording quality, and whether to enable a noise reduction function. The WAV format can preserve high audio quality.

Step A2: during a recording process, an audio signal is acquired in real time using a built-in microphone of the Bluetooth headset, and the acquired audio signal is processed to obtain a digital signal.

In step A2, the acquired audio signal is subjected to signal amplification and denoising, wherein a denoising method specifically comprises:

Step B1: the acquired audio signal is preprocessed, wherein the preprocessing comprises performing direct-current offset cancellation and applying a window function at signal front ends, so as to reduce the influence of noise during processing;

Step B2: a time domain signal is converted into a frequency domain representation using a fast Fourier transform, and after a frequency spectrum is obtained, the frequency spectrum is represented as an amplitude spectrum and a phase spectrum;

Step B3: a segment that does not contain a useful signal is selected to perform noise estimation, and a frequency spectrum of a noise segment is calculated to obtain an amplitude spectrum of the segment;

in this step, smoothing is applied to the frequency spectrum of noise to obtain a more stable noise model;

Step B4: spectral subtraction is performed on the amplitude spectrum of an original signal to obtain a second amplitude spectrum, wherein a calculation method for the second amplitude spectrum is specifically as follows:

$$F(a) = \max\left(2H(a) - \frac{G(a)+1}{2G(a)} - \beta, \ 0\right),$$

wherein F(a) represents the second amplitude spectrum obtained after denoising, G(a) represents an estimated noise amplitude spectrum, H(a) represents an amplitude spectrum of a noisy signal, $\beta$ represents an over-subtraction factor for further reducing residual noise, and max represents comparing two values and selecting the larger one;

Step B5: a new frequency spectrum is constructed by combining the denoised amplitude spectrum with the phase spectrum of the original signal, wherein a calculation method for the new frequency spectrum is specifically as follows:

$$F(a)_0 = \frac{F(a)}{2F(a)+1} e^{L\delta(a)},$$

[0060]

wherein $F(a)_0$ represents the constructed new frequency spectrum, $F(a)$ represents the second amplitude spectrum obtained after denoising, $eL(a)$ represents the phase spectrum of the original noisy signal, and $\delta(a)$ represents the phase angle of an a-th frequency component; and

Step B6: the denoised frequency spectrum is converted back into a time domain using an inverse fast Fourier transform to obtain a processed audio signal.

Sound detection is performed on the denoised audio, and whether the denoised audio contains sound is determined on the basis of an audio confirmation value, wherein a calculation method for the audio confirmation value is specifically as follows:

$$R = \frac{\rho \sum_{H=f_{min}}^{f_{max}} N(e, f)}{H \sum_{e=1, f=f_{min}}^{H} N(e, f)},$$

wherein R represents the audio confirmation value, N(e, f) represents the amplitude value of an f-th frequency point of an e-th frame, H represents the total number of audio frames, $\rho$ represents the frequency spectrum window length, $f_{max}$ represents the upper limit of the amplitude value of the frequency point, and $f_{min}$ represents the lower limit of the amplitude value of the frequency point.

The preprocessed audio signal to be tested is framed and windowed, using a frame length of 32 milliseconds, a frame shift of 16 milliseconds, and a Hamming window. A Fourier transform with a length of 8192 points is then performed to obtain the audio signal to be tested.

Framing and windowing: the audio signal is divided into continuous frames, each frame having a length of 32 milliseconds, with an overlap (frame shift) of 16 milliseconds between adjacent frames. This is done such that the time-varying characteristics of the signal can be captured when the audio signal is analyzed.

Hamming windowing: to reduce spectral leakage, each frame is multiplied by a Hamming window function. The Hamming window is a commonly used window function, which can provide a high frequency resolution and a low sidelobe level in the frequency domain.

Fourier Transform: a Fourier transform with a length of 8192 points is performed on each windowed frame, which converts the audio signal from the time domain to the frequency domain to obtain a spectral signal.

A calculation method for N(e, f) is specifically as follows:

$$N(e, f) = \sum_{T=\rho}^{2\rho} N(2e, 2\rho f + \rho),$$

wherein N(e, f) represents the amplitude value of the f-th frequency point of the e-th frame, T represents the harmonic value, and $\rho$ represents the frequency spectrum window length.

The calculated audio confirmation value is compared with a preset audio confirmation value threshold; if the calculated audio confirmation value is greater than the preset audio confirmation value threshold, it is determined that the audio contains sound; and if the calculated audio confirmation value is less than the preset audio confirmation value threshold, it is determined that the audio contains no sound.

A method for amplifying the audio signal specifically comprises:

Step C1: the denoised audio signal is converted into an electrical signal.

This electrical signal is typically very weak and may only be recognized by sensitive electronic components.

Step C2: the weak audio signal is introduced into a preamplifier which increases the strength of the weak signal to a level available for processing.

Step C3: on the basis of a gain adjustment function of the preamplifier, the user sets a gain value as needed.

The gain refers to the amplification ratio of the signal, and appropriate gain settings ensure that the audio signal is not excessively distorted or contaminated by noise.

Step C4: the amplified signal is subjected to subsequent digital signal processing, so as to further clarify the signal and apply various audio effects.

Step A3: a watermark is embedded into the processed digital signal, and a watermark assessment value is calculated on the basis of the embedded watermark.

In step A3, after a watermark is embedded into the digital signal, a watermark assessment value is calculated, wherein a calculation method for a first capacity value is specifically as follows:

$$D = \frac{E^2}{2E+1} \times \log_2\left(\frac{J+K+1}{2J}\right),$$

wherein D represents the first capacity value, E represents the bandwidth of an audio carrier signal, J represents the watermark efficiency, and K represents the attack power.

A calculation method for a frequency domain watermark evaluation value is specifically as follows:

$$I = 2a\frac{P(R_0+R_1+L)}{L(R_0+R_1)(2P+1)},$$

wherein I represents the frequency domain watermark evaluation value, a represents the sampling frequency of an audio signal, P represents the number of watermark bits embedded in each audio frequency domain segment, L represents the length of an audio time domain segment, $R_0$ represents the number of audio time domain segments, and $R_1$ represents the number of audio frequency domain segments.

A calculation method for a correlation coefficient is specifically as follows:

$$X = \frac{t \times t_0}{\sqrt{t^3 \times \left(t_0^2+1\right)}},$$

wherein X represents the correlation coefficient, t represents the bit value of an original watermark, and $t_0$ represents the bit value of the detected watermark.

A calculation method for a watermark stability value is specifically as follows:

Wd=X(D+I), wherein Wd represents the watermark stability value, X represents the correlation coefficient, I represents the frequency domain watermark evaluation value, and D represents the first capacity value.

A calculation method for a watermark sampling ratio is specifically as follows:

$$Z = \ln\frac{\sum_{b=0}^{T}(2q^2(b)+1)}{q_0(b)\sum_{b=0}^{T}[q_0(b)-q(b)]^2},$$

wherein Z represents the watermark sampling ratio, q(b) represents the sample value of a host audio signal before watermark embedding, $q_0(b)$ represents the sample value of the host audio signal after watermark embedding, and T represents the total number of samples.

A calculation method for the watermark assessment value is specifically as follows:

$$Q = \left|\frac{W_d+1}{W_d-1}\right| \sqrt{X(W_d^2 + Z^2)},$$

wherein Q represents the watermark assessment value, X represents the correlation coefficient, Z represents the watermark sampling ratio, and Wd represents the watermark stability value.

The calculated watermark assessment value is compared with a preset watermark evaluation threshold; if the calculated watermark assessment value is greater than the preset watermark assessment threshold, a success instruction is output, and the process proceeds to step A5; and if the calculated watermark assessment value is less than the preset watermark assessment threshold, a failure instruction is output, and the watermark is re-embedded.

Step A4: the digital signal, in which the watermark has been embedded, is converted into an analog signal, and an audio signal is reconstructed.

In step A4, a DAC device is selected, a reference voltage, an output range and a resolution of the DAC are set, and a digital signal to be converted is extracted; the processed digital signal values are written into a data input register of the DAC, waiting for conversion to start; according to the design of the DAC, the conversion is triggered by an external signal, and during the conversion process, a clock signal of the DAC is ensured to be correct, such that the digital signal is converted as planned.

Once the DAC completes conversion, a stable analog signal is obtained at an output end; this process is influenced by the settling time of the DAC; the output analog signal is smoothed by a filter to obtain a more natural audio waveform, and after DAC and filtering, the signal is converted into a continuous analog waveform, wherein the continuous analog waveform is the reconstructed audio signal.

The DAC represents digital-to-analog conversion.

Step A5: watermark detection is performed on the reconstructed audio signal, and comparison is performed on the basis of the detected watermark.

In step A5, watermark information is extracted from the reconstructed audio signal, and calculation is performed on the extracted watermark information to obtain a watermark similarity value, wherein a calculation method for the watermark similarity value is specifically as follows:

$$V = \sum_{i=1}^{S} Y_i \times M \times N(e, \ f),$$

wherein V represents the watermark similarity value, S represents a sample point, M represents the number of audio frames, and N(e, f) represents the amplitude value of the f-th frequency point of the e-th frame.

Calculation is performed on the basis of the calculated watermark similarity value; if the calculated watermark similarity value is equal to a preset watermark similarity value threshold, a security instruction is output, and the audio signal is stored in a built-in memory of the Bluetooth headset; and if the calculated watermark similarity value is not equal to the preset watermark similarity value threshold, a danger instruction is output, and the process proceeds to step A2.

It should be noted that the preset values in this disclosure are determined according to specific conditions, and accordingly, this embodiment is not limited to any specific numerical values.

Finally, the foregoing description is merely a preferred embodiment of the present disclosure and is not intended to limit the present disclosure. Any modifications, equivalent replacements, improvements and the like made within the spirit and principle of the present disclosure shall fall within the scope of protection of the present disclosure.

**Claims**

1.   An audio recording and conversion method for a Bluetooth headset, comprising:

Step A1: enabling a Bluetooth function of an audio source device, performing pairing and connection via Bluetooth, and confirming recording settings;
Step A2: during a recording process, acquiring an audio signal in real time using a built-in microphone of the Bluetooth headset, and processing the acquired audio signal to obtain a digital signal;
Step A3: embedding a watermark into the processed digital signal, and calculating a watermark assessment value on the basis of the embedded watermark;
Step A4: converting the digital signal, in which the watermark has been embedded, into an analog signal, and reconstructing an audio signal; and
Step A5: performing watermark detection on the reconstructed audio signal, and performing determination on the basis of the detected watermark.

2. The audio recording and conversion method for a Bluetooth headset according to claim 1, wherein in step A2, the acquired audio signal is subjected to signal amplification and denoising; a denoising method specifically comprises:

Step B1: preprocessing the acquired audio signal, wherein the preprocessing comprises performing direct-current offset cancellation and applying a window function at signal front ends, so as to reduce the influence of noise during processing;
Step B2: converting a time domain signal into a frequency domain representation using a fast Fourier transform, and after a frequency spectrum is obtained, representing the frequency spectrum as an amplitude spectrum and a phase spectrum;
Step B3: selecting a segment that does not contain a useful signal to perform noise estimation, and calculating a frequency spectrum of a noise segment to obtain an amplitude spectrum of said segment;
Step B4: performing spectral subtraction on the amplitude spectrum of an original signal to obtain a second amplitude spectrum, wherein a calculation method for the second amplitude spectrum is specifically as follows:

$$F(a) = \max\left(2H(a) - \frac{G(a)+1}{2G(a)} - \beta, \ 0\right),$$

wherein F(a) represents the second amplitude spectrum obtained after denoising, G(a) represents the estimated noise amplitude spectrum, H(a) represents the amplitude spectrum of a noisy signal, $\beta$ represents an over-subtraction factor for further reducing residual noise, and max represents comparing two values and selecting the larger one;
Step B5: constructing a new frequency spectrum by combining the denoised amplitude spectrum with the phase spectrum of the original signal, wherein a calculation method for the new frequency spectrum is specifically as follows:

$$F(a)_0 = \frac{F(a)}{2F(a)+1} e^{L\delta(a)},$$

wherein $F(a)_0$ represents the constructed new frequency spectrum, F(a) represents the second amplitude spectrum obtained after denoising, eL(a) represents the phase spectrum of the original noisy signal, and $\delta(a)$ represents the phase angle of an a-th frequency component; and
Step B6: converting the denoised frequency spectrum back into a time domain using an inverse fast Fourier transform to obtain a processed audio signal.

3. The audio recording and conversion method for a Bluetooth headset according to claim 2, wherein sound detection is performed on the denoised audio, and whether the denoised audio contains sound is determined on the basis of an audio confirmation value, wherein a calculation method for the audio confirmation value is specifically as follows:

$$R = \frac{\rho \sum_{H=f_{min}}^{f_{max}} N(e, \ f)}{H \sum_{e=1, \ f=f_{min}}^{H} N(e, \ f)},$$

wherein R represents the audio confirmation value, N(e, f) represents the amplitude value of an f-th frequency point of an e-th frame, H represents the total number of audio frames, $\rho$ represents the frequency spectrum window length, $f_{max}$ represents the upper limit of the amplitude value of the frequency point, and $f_{min}$ represents the lower limit of the amplitude value of the frequency point;

a calculation method for N(e, f) is specifically as follows:

$$N(e, \ f) = \Sigma_{T=\rho}^{2\rho} N(2e, \ 2\rho f + \rho),$$

wherein N(e, f) represents the amplitude value of the f-th frequency point of the e-th frame, T represents the harmonic value, and $\rho$ represents the frequency spectrum window length;

the calculated audio confirmation value is compared with a preset audio confirmation value threshold; if the calculated audio confirmation value is greater than the preset audio confirmation value threshold, it is determined that the audio contains sound; and if the calculated audio confirmation value is less than the preset audio confirmation value threshold, it is determined that the audio contains no sound.

4. The audio recording and conversion method for a Bluetooth headset according to claim 1, wherein in step A3, after a watermark is embedded into the digital signal, a watermark assessment value is calculated, wherein a calculation method for a first capacity value is specifically as follows:

$$D = \frac{E^2}{2E+} \times \log_2 \left(\frac{J+K+1}{2J}\right),$$

wherein D represents the first capacity value, E represents the bandwidth of an audio carrier signal, J represents the watermark efficiency, and K represents the attack power;

a calculation method for a frequency domain watermark evaluation value is specifically as follows:

$$I = 2a \frac{P(R_0 + R_1 + L)}{L(R_0 + R_1)(2P+ \ )},$$

wherein I represents the frequency domain watermark evaluation value, a represents the sampling frequency of the audio signal, P represents the number of watermark bits embedded in each audio frequency domain segment, L represents the length of an audio time domain segment, $R_0$ represents the number of audio time domain segments, and $R_1$ represents the number of audio frequency domain segments.

5. The audio recording and conversion method for a Bluetooth headset according to claim 4, wherein a calculation method for a watermark stability value is specifically as follows:

Wd=X(D+I), wherein Wd represents the watermark stability value, X represents a correlation coefficient, I represents the frequency domain watermark evaluation value, and D represents the first capacity value;

a calculation method for a watermark sampling ratio is specifically as follows:

$$Z = \ln \frac{\Sigma_{b=0}^{T}(2q^2(b)+1)}{q_0(b)\Sigma_{b=0}^{T}[q_0(b)-q(b)]^2},$$

wherein Z represents the watermark sampling ratio, q(b) represents a sample value of a host audio signal before watermark embedding, $q_0(b)$ represents a sample value of the host audio signal after watermark embedding, and T represents the total number of samples.

6. The audio recording and conversion method for a Bluetooth headset according to claim 4 or 5, wherein a calculation method for the watermark assessment value is specifically as follows:

$$Q = \left|\frac{W_d+1}{W_d-1}\right| \sqrt{X(W_d^2 + Z^2)},$$

wherein Q represents the watermark assessment value, X represents the correlation coefficient, Z represents the watermark sampling ratio, and Wd represents the watermark stability value.

7. The audio recording and conversion method for a Bluetooth headset according to claim 1, wherein in step A4, a DAC device is selected, a reference voltage, an output range and a resolution of the DAC are set, and a digital signal to be converted is extracted; the processed digital signal values are written into a data input register of the DAC, waiting for conversion to start; according to the design of the DAC, the conversion is triggered by an external signal, and during the conversion process, a clock signal of the DAC is ensured to be correct, such that the digital signal is converted as planned;

once the DAC completes conversion, a stable analog signal is obtained at an output end; the output analog signal is smoothed by a filter to obtain a more natural audio waveform, and after DAC and filtering, the signal is converted into a continuous analog waveform, wherein the continuous analog waveform is the reconstructed audio signal.

8. The audio recording and conversion method for a Bluetooth headset according to claim 1, wherein in step A5, watermark information is extracted from the reconstructed audio signal, and calculation is performed on the extracted watermark information to obtain a watermark similarity value, wherein a calculation method for the watermark similarity value is specifically as follows:

$$V = \sum_{i=1}^{S} Y_i \times M \times N(e, \ f),$$

wherein V represents the watermark similarity value, S represents a sample point, M represents the number of audio frames, and N(e, f) represents the amplitude value of an f-th frequency point of an e-th frame;

calculation is performed on the basis of the calculated watermark similarity value; if the calculated watermark similarity value is equal to a preset watermark similarity value threshold, a security instruction is output; and if the calculated watermark similarity value is not equal to the preset watermark similarity value threshold, a danger instruction is output.

9. The audio recording and conversion method for a Bluetooth headset according to claim 8, wherein when a control end receives the security instruction, the audio signal is stored in a built-in memory of the Bluetooth headset; and when the control end receives the danger instruction, the process proceeds to step A2.

Step A1: enabling a Bluetooth function of an audio source device, performing pairing and connection via Bluetooth, and confirming recording settings

Step A2: during a recording process, acquiring an audio signal in real time using a built-in microphone of the Bluetooth headset, and processing the acquired audio signal to obtain a digital signal

Step A3: embedding a watermark into the processed digital signal, and calculating a watermark assessment value on the basis of the embedded watermark

Step A4: converting the digital signal, in which the watermark has been embedded, into an analog signal, and reconstructing an audio signal

Step A5: performing watermark detection on the reconstructed audio signal, and performing determination on the basis of the detected watermark

**FIG. 1**

## INTERNATIONAL SEARCH REPORT

| International application No. |
| --- |
| **PCT/CN2025/079555** |

| A. | CLASSIFICATION OF SUBJECT MATTER |
| --- | --- |

G11B20/00(2006.01)i

According to International Patent Classification (IPC) or to both national classification and IPC

| B. | FIELDS SEARCHED |
| --- | --- |

Minimum documentation searched (classification system followed by classification symbols)

IPC:G21B

Documentation searched other than minimum documentation to the extent that such documents are included in the fields searched

Electronic data base consulted during the international search (name of data base and, where practicable, search terms used)

CJFD, CNTXT, ENTXTC, DWPI: 安全, 保密, 耳机, 蓝牙, 录音, 麦克风, 数字信号, 水印, 音频, 转换, 数模, 模数, secur+, confident+, headphone?, bluetooth, sound recording, microphone, digital signal, watermark, audio, convers+, DAC, ADC

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 119207487 A (ANHUI AIDE FUTURE INTELLIGENT TECHNOLOGY CO., LTD.) 27 December 2024 (2024-12-27)<br>claims 1-9 | 1-9 |
| X | JP 2004357294 A (TOSHIBA CORP.) 16 December 2004 (2004-12-16)<br>description, paragraphs 136-146, and figures 24-25 | 1-9 |
| A | CN 105976823 A (CENTRAL CHINA NORMAL UNIVERSITY) 28 September 2016 (2016-09-28)<br>entire document | 1-9 |
| A | CN 116600281 A (SHENZHEN GEEKORS TECHNOLOGY CO., LTD.) 15 August 2023 (2023-08-15)<br>entire document | 1-9 |
| A | CN 117939360 A (GUANGZHOU WESDAR ELECTRONIC TECHNOLOGY CO., LTD.) 26 April 2024 (2024-04-26)<br>entire document | 1-9 |
| A | US 2012172004 A1 (SILVA CHRISTOPHER ANTHONY) 05 July 2012 (2012-07-05)<br>entire document | 1-9 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **18 June 2025** | **24 June 2025** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
|---|
| **PCT/CN2025/079555** |

| Patent document cited in search report | | | Publication date (day/month/year) | Patent family member(s) | | | Publication date (day/month/year) |
|---|---|---|---|---|---|---|---|
| CN | 119207487 | A | 27 December 2024 | None | | | |
| JP | 2004357294 | A | 16 December 2004 | JP | 3811165 | B2 | 16 August 2006 |
| CN | 105976823 | A | 28 September 2016 | None | | | |
| CN | 116600281 | A | 15 August 2023 | None | | | |
| CN | 117939360 | A | 26 April 2024 | None | | | |
| US | 2012172004 | A1 | 05 July 2012 | US | 9479346 | B2 | 25 October 2016 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202411279492